# EUROPEAN PATENT APPLICATION

(11) **EP 3 062 420 A1**
(43) Date of publication of application: **31.08.2016**
(21) Application number: 16153584.4
(22) Date of filing: 01.02.2016
(51) Int. Cl.: H02K 3/14

(54) **A WINDING FOR AN ELECTRIC MACHINE**

(30) Priority: 27.02.2015 EP 15156959
(71) Applicant: ALSTOM Renewable Technologies, 38100 Grenoble (FR)
(72) Inventor: Haldemann, Johann, 5400 Baden (CH); Maurer, Frederic, 5400 Baden (CH)
(74) Representative: General Electric Technology GmbH

(57) **Abstract**

The present disclosure relates to transposed stator and rotor conducting bars. It is an object of the invention to provide a conductor bar especially suitable for hydro generators and wind turbine generators. Described is a conductor bar for a stator or a rotor of an electric machine comprising a multitude of mutually electrically insulated transposed strands, characterized in that the strands in an active part of the conductor bar are transposed between 330° and 390° and in that the strands in an end part of the conductor bar are transposed between 30° and 60°.

## Description

### TECHNICAL FIELD

The present disclosure relates to transposed stator and rotor conducting bars as parts of windings in electric machines.

### BACKGROUND OF THE INVENTION

The invention relates to a transposed stator or rotor conductor bar and to the use of a transposed stator or rotor conductor bar.

Stator and rotor conductor bars or winding bars of large AC machines regularly comprise a multiplicity of mutually insulated conductor elements which are transposed with one another according to the Roebel principle and are shortcircuited at both bar ends (cf. Sequenz "Herstellung der Wicklungen elektrischer Maschinen" [Manufacture of the windings of electric machines], Springer-Verlag Vienna, New York, 1973, pages 69 - 83, in particular Figure 19 on page 79).

The classic Roebel bar has a 360° transposition in the slot part, the part of the Roebel bar housed in the slot is also referred here as active part. In the end winding, also referred to here as end parts, the conductor elements or conductor bars are guided in parallel, that is to say with no transposition. However, it was soon recognized that outside the slot or notch of the stator or rotor, too, the bars are covered by alternating fields which permeate the end parts from the broad side (transverse components) and from the narrow side (radial components). In order to avoid undesirable additional losses due to the end field of the stator, the end parts are subdivided into mutually insulated conductor elements. However, losses still arise due to so-called strand loops. In order to limit the induction of parasitic voltages in the winding overhang at the end parts of the conductor bar it is common to transpose the end parts of Roebel bars in order to reduce the induced voltages. Then, the remaining circulating currents are minimized.

The invention refers to transposition schemes of winding bars such as is revealed, for example, in DE-C 14 88 769. There, transposition schemes are described with a specific transposition of strands of the conductor bar in the active part and the end part. The strands do not keep the position with regard to each other but are transposed throughout the conductor bar with regard to the position towards each other to avoid circulating currents. The active part of the conductor bar is the part rested in a slot of the stator or rotor core. This active part is commonly straight and referred to as straight part rested in the slot area in DE-C 14 88769. The straight part differs from the curved parts at both ends, referred to in DE-C 14 88769 as frontal connections. These curved parts project from the straight active part out of the slots and are referred to as end parts in this disclosure. In DE-C 14 88769, the strands of the active part have a transposition of 360°, whereas the end parts have each a transposition of the strands of 90°. This configuration of the conductor bar is described as simply to manufacture as the transposition angles are small compared to transposition angles of e.g. 540° in the active part and 180° in the end part.

### SUMMARY

It is an object of the invention to provide a conductor bar especially suitable for hydro generators and wind turbine generators.

This object is achieved according to the invention by a conductor bar according to claim 1 and according to the use of a conductor bar according to claim 7.

Further examples of the inventions are described in the dependent claims.

Disclosed are essentially transpositions of the strands in the end parts in the range between 30° and 60° and transpositions of the strands in the active part in the range between 330° and 390°.

A further example discloses the transposition in the active part of the conductor bar in the range of 360° and 390° with a transposition in the end part of the conductor bar between 30° and 60°.

Another example discloses the transposition in the active part of the conductor bar in the range of 345° to 350° with a transposition in the end part of the conductor bar between 30° and 60°.

### BRIEF DESCRIPTION OF THE DRAWINGS

A more complete appreciation of the invention, the considerations underlying it will be readily obtained as the same becomes better understood by reference to the following detailed description and considered in connection with the accompanying drawings, wherein:
- Fig. 1: shows a schematic view of a known Roebel bar of the state of the art with a complete transposition in an active part and no transposition in end parts according to a transposition scheme of 0°/360°/0°;
- Fig. 2: shows a schematic view of a Roebel bar with an incomplete transposition of 330° in the active part and no transposition in the end parts according to a transposition scheme of 0°/330°/0° according to an example of the invention;
- Fig. 3: shows two schematic side views of the arrangements of strands in two adjacent stacks of strands and the change of the position of two marked strands from the beginning of the first end part to the end of the second end part according to the transposition schemes of Figs. 4 and 5;
- Fig. 4: shows a schematic view of a Roebel bar with an incomplete transposition of 330° in the active part and 60° transposition in the end parts according to a transposition scheme of 60°/330°/60° illustrating the course of two marked strands along the Roebel bar according to the transposition scheme of Fig. 3;
- Fig. 5: shows a schematic view of a Roebel bar corresponding to the example of Figs. 3 and 4 including signs illustrating the direction of the electric voltages induced in a loop composed of two strands;
- Fig. 6: shows a schematic view of a Roebel bar with a transposition of 360° in the active part and 60° transposition in the end parts according to a transposition scheme of 60°/360°/60° according to an example of the invention illustrating the course of two marked strands along the Roebel bar according to the transposition scheme of Fig. 7;
- Fig. 7: shows two schematic side views of the arrangements of strands in two adjacent stacks of strands and the change of the position of two marked strands from the beginning of the first end part to the end of the second end part according to the transposition scheme of Figs. 6;
- Fig. 8: shows for illustration reasons in a different view each of the two transposition schemes, 330° and 360° in the active part, with two stacks with transposed strands, at the left the strands of the end parts and the active part are transposed, whereas at the right the end parts are not transposed.

Referring now to the drawings, wherein like reference numerals designate identical parts throughout the several views. The description is based on a Roebel bar consisting of two stacks, each stack composed of six strands. The invention however is not restricted to Roebel bars of this number of strands per stack.

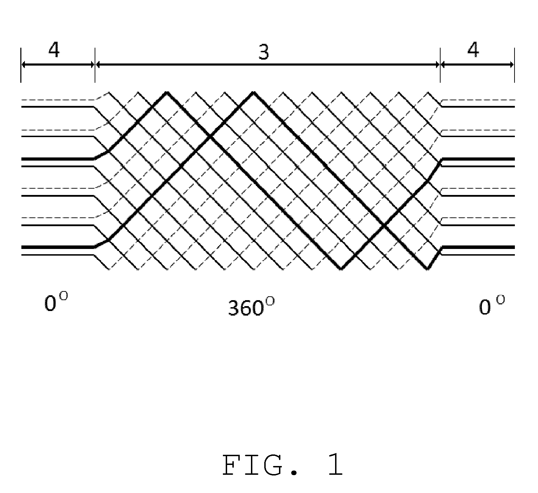

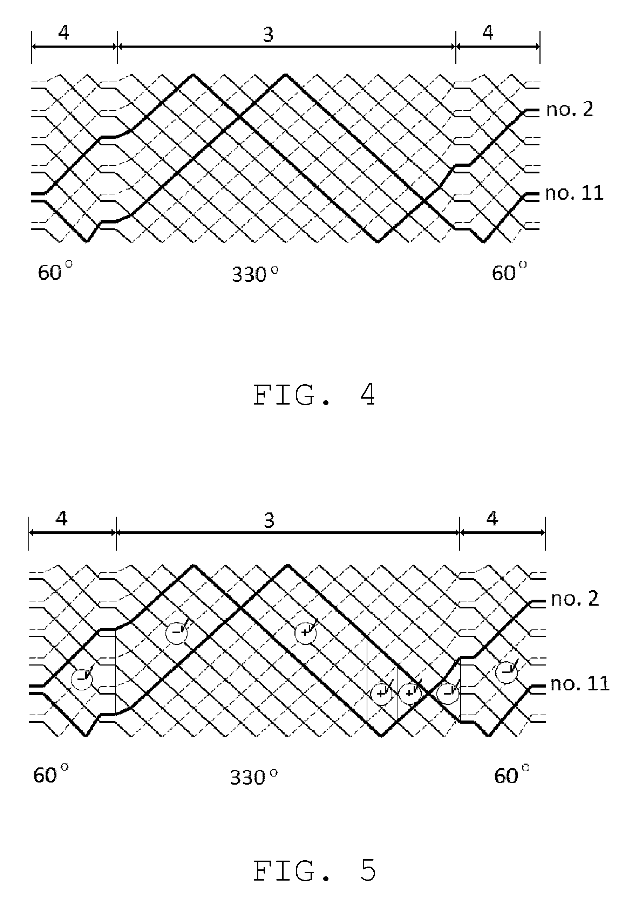

Fig. 1 shows in a schematic way a transposition of strands 6 which are composed to a conductor bar 2. The strands 6 are electrical conducting, commonly fabricated from copper. The conductor bar 2 is designed to be housed into slots of a stator or rotor of an electric machine. Here, twelve strands 6 are composed and transposed to build up two conductor bars 2, projecting from the left to the right. In the foreground solid lines are shown representing a second stack 11 of strands 6. In the background dotted lines are shown representing a first stack 10 of strands 6, see Fig. 4 described below. The course of the strands 6 is shown by lines, solid lines and dotted lines alternately. The solid lines characterize a different stack 11 of strands 6 than the dotted lines, i.e. two stacks 10, 11 of strands 6 are transposed with each other, the strands 6 change their position as will be described in detail. The horizontal lines at the left and right end refer to the end parts 4 of the conductor bar 2. The diagonal lines in the middle refer to the active part 3 of the conductor bar 2. The active part 3 is the part of the conductor bar 2 resting in the slots of a rotor or stator contributing to the magnetic induction. The end parts 4 freely project out of the slots in a bended manner to be connected to electric terminals to conduct electric current. The left end part 4 at one end of the rotor or stator has no transposition of the strands 6 here in Fig. 1, the strands 6 project along the horizontal axis without changing position. The strands 6 in the active part 3 in the middle of the electric machine in the contrary are transposed, the strands 6 change the positions along the course. As an example two strands 6 are described in detail which are illustrated by bolt lines. One strand 6 is the fifth strand 6 from above, the second strand 6 is the second strand 6 from below. Both mentioned strands 6 are in one stack, the first stack 10, at the beginning of the active part 3 at the left. Adjacent to both strands 6 are strands 6 in the adjacent stack of strands 6, the second stack 11, illustrated by solid lines. The change of the position of the strands 6 in the active part 3 of the conductor bar 2 is referred to as transposition of the conducting strands 6. A transposed conductor bar 2 is commonly referred to as Roebel bar. The transposition or Roebelisation brings benefits in terms of magnetization and thus a more efficient energy generation. It can be seen in Fig. 1 that the strands 6 change the position within the stacks 10, 11 and also change the position from one stack 10, 11 to the other, hereby two stacks 10, 11 are described resting in a slot adjacent to each other. Further stacks 10, 11 of strands 6 can be composed and housed in the slot. The transposition from the first stack 10 to the second stack 11 is illustrated by a change of a dotted line to a solid line and vice versa at the upper and lower edge of the conductor bar 2. The shown and described scheme of transposition in the active part 3 of the conductor bar 2 is a complete transposition, as the strands 6 in the active part 3 return to their original position at the other end of the active part 3 at the right. It can be seen in Fig. 1 that all strands 6 have the same positions at the left end part 4 and the right end part 4 after transposition in the active part 3. The conductor bar 2 has thus a transposition scheme according to 0°/360°/0° read from left to right according to Fig. 1 with the angle of 0° indicating no transposition in both end parts 4 and the angle of 360° indicating a complete transposition in the active part 3.

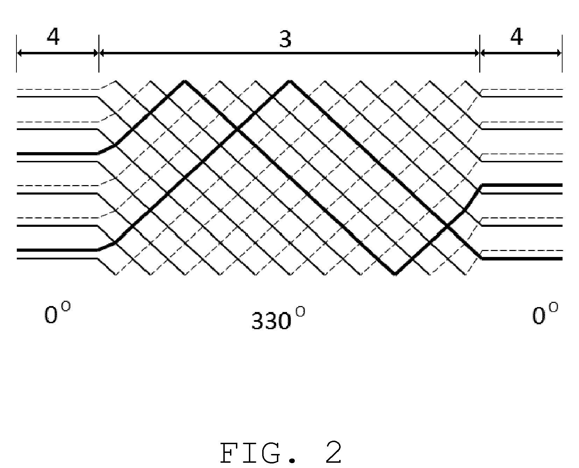

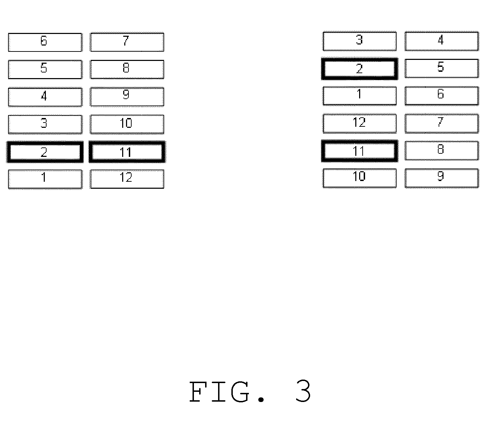

Fig. 2 shows a schematic view of a conductor bar designed as a Roebel bar with an incomplete transposition of 330° in the active part 3 and no transposition in the end parts 4. The transposition scheme is thus according to 0°/330°/0° according to an example of the invention. In Fig. 2 in the contrary to the design of Fig. 1 the strands 6 do not perform a common complete 360° transposition in the active part 3. The transposition in this example performs a transposition of 330° along the active part 3. This performance is achieved by a particularly designed transposition of the strands 6 as described by example. Two strands 6 are marked in bolt, the fifth strand 6 from above in the second stack 11 and the second strand 6 from below in the second stack 11. These strands 6 are slightly changed in both end parts 4 as all the adjacent residual ten strands 6 are. Regarding the fifth strand 6 from above this strand 6 projects in an upward diagonal direction for about one fourth of the length of the conductor bar 2 in this scheme. Then, this strand 6 reaches the end of the corresponding first stack 10 and projects to the second stack 11. In the second stack 11, the strand 6 is further transposed, illustrated by the bolt line in the downward diagonal direction for about half of the length of the conductor bar 2. At the lower edge of the conductor bar 2 the strand 6 changes the stack again and is transposed to the first stack 10 again. The change of the position of the strand 6 proceeds then in the first stack 10, illustrated by the bolt line in upward diagonal direction. The strand 6 there does not return to the original position. At the right end of the active part 3 and the beginning of the right end part 4 the corresponding strand 6 starting at the fifth position above arrives at the seventh position from above in the same first stack 10. The positioning of the strands 6 is further described with regard to Fig. 3. Next, a second example of a transposition of a strand 6 according to the transposition scheme according to Fig. 2 is described. The strand 6 at the second lowest position in Fig. 2 is drawn with a bolt line. This strand 6 lays in the same first stack 10 as the strand 6 described above. At the left end part 4 the corresponding strand 6 is positioned at the second position from below. At the right edge of the left end part 4 the strand 6 is transposed and changes the position in the active part 3. The bolt line is directed upwards for half of the length of the conductor bar 2. At the upper end the corresponding strand 6 changes the position from the first stack 10 to the second stack 11. Then, the bolt line is directed downwards and the strand 6 changes the position along half of the length of the conductor bar 2. The strand 6 arrives at the right end of the active part 3 and the left edge of the right end part 4. In the adjacent end part 4 the strand 6 keeps the position at the lowest position of the second stack 11 of the conductor bar 2. The strand 6 starting at the second lowest position of the first stack 10 and ending at the lowest position of the second stack 11, performing a transposition of 330°. Comparing both transposition schemes of Fig. 1 with Fig. 2 with the same position of strands 6 at the left end and different end positions of strands 6 at the right end the different designs become apparent. In Fig. 1 the strand 6 at the fifth position in the first stack 10 arrives at the same fifth position in the first stack 10, which is the common design. In the example of the invention according to Fig. 2 the strand 6 at the fifth position of the first stack 10 arrives at the seventh position of the first stack 10. This means the corresponding strand 6 is not transposed in a common way. Similarly, the other eleven strands 6 are transposed in an incomplete way unequal to 360° in the active part 3. The second strand 6 for further example in bolt line starts at the second position from below in the first stack 10 and ends at the last position below in the second stack 11. This strand 6 thus performs a change in position from one stack 10, 11 to the other in the contrary to the configuration of Fig. 1.

Fig. 3 shows two schematic side views of the arrangements of strands 6 in two adjacent stacks 10, 11 of strands 6 and the change of the position of two marked strands 6 from the beginning of the active part 3 to the end of the active part 3. Fig. 3 shows the same transposition scheme as Figs. 4 and 5. The separate strands 6 have assigned numbers, in the first stack 10 at the left the numbers one to six from the bottom to the top. In the second stack 11 from seven to twelve from the top to the bottom. The corresponding strands 6 in Figs. 4 and 5 are drawn dotted in the first stack 10 and solid in the second stack 11. This illustrates the second stack 10 being in front of the first stack 11, i.e. when turning the perspective of Fig. 3 such that the left first stack 10 resides behind the right second stack 11 and the view to the first stack 10 is covered then. At the right side of Fig. 3 the same two stacks 10, 11 are shown after Roebelisation, i.e. with the state of the positions of the strands 6 at the right end of the right end part 4. As examples two strands 6 are highlighted and drawn in bolt, these are the strands 6 numbered with two in the first stack 10 and with eleven in the second stack 11. In Figs 4 and 5 these two strands 6 are positioned at the left end part 4 on the third position from below which is the second position in the first stack 10, and on the fourth position from below, which is the second position in the second stack 11. Figs. 4 and 5 illustrate schematically the transposition of strands 6 with the first stack 10 in the background and the second stack 11 in the foreground. The strand 6 with the number two changes the position along the length of the conductor bar 2 which is perpendicular to the image plane of Fig. 3. The transposition of this strand 6 can be seen in Fig. 4 where the end parts 4 are transposed each by an angle of 60°. This transposition is illustrated from strand 6 number eleven by a diagonal line directed downwards passing two strands 6 to the edge of the second stack 11 and a subsequent change to the first stack 10 to the right end of the left end part 4. There, the strand 6 with the number eleven is transposed along the whole first stack 10, illustrated by a diagonal line directed upwards to the edge of the active part 3. At this edge the strand 6 with the number eleven changes the stack again to the second stack 11 and is transposed along the whole length of the second stack 11, illustrated by a diagonal bolt line directed downwards. At the edge of the second stack 11, in the right end part 4, the strand 6 with the number eleven changes again the stack to the first stack 10 and arrives finally at the position two from the bottom, as can be seen at the right side of Fig. 3 which is the second strand 6 of the first stack 10 and the fourth strand 6 in the scheme according to Figs. 4 and 5. Similar to the strand 6 with the number eleven the strand 6 with a number two is drawn in bolt. This strand 6 rests at the left edge of the end part 4 at the position two from the bottom, in the first stack 10. It is transposed by 60° in the left end part 4 similar to the strand 6 with the number eleven, which is illustrated by the bolt line directed diagonal upwards. In the active part 3 the strand 6 with the number two is transposed by 330° similar to the transposition scheme of the strand 6 with the number eleven. The position of the strand 6 with the number two is however different of course. The strand 6 with the number two is transposed to the second stack 11 at the upper edge of Figs. 4 and 5. Then, this strand 6 is transposed through the whole second stack 11 to change its position to the first stack 6 of strands 6 again at the lower edge to finally reach the second position of the first stack 10 from above at the right end of the conductor bar 2. This position is the third position in the schematic illustration according to the Figs. 4 and 5. Both strands 6 described by example consequently perform a transposition scheme of 60°/330°/60° with 60° in the end parts 4. This means, at both end parts 4 the strands 6 perform a transposition of 60° and in the active part 3 in the middle the strands 6 perform a transposition of 330°. The transposition unequal to the full transposition of 360° in the active part 3 is referred to as an incomplete transposition hereby.

In Fig. 4 and Fig. 5 an end winding Roebelisation of 60° is shown. Figs. 4 and 5 show identical transposition schemes, in Fig. 5 in addition for further explanation some areas enclosed by strands 6 with solid lines are marked with a plus or with a minus sign. These signs denote how the transversal magnetic fields are compensated by means of the transpositions. The plus signs respectively the minus signs represent the field compensation that occurs in a transposed Roebel bar. The minus and plus signs in circles denote the sign of the voltages induced in the areas of the loops formed by any two strands, taking account of the sense of rotation of the area contours and the direction of the magnetic flux permeating them. The disclosed transpositions of the strands 6 change the circulating currents in the conductor bar 2.

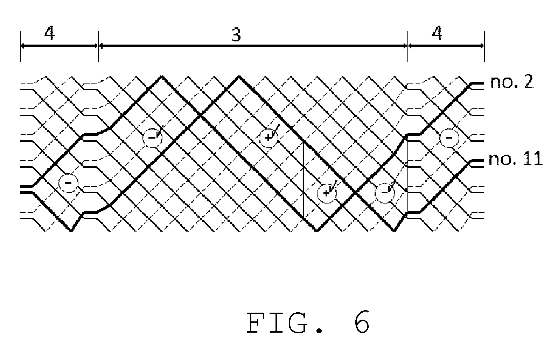

Fig. 6 shows a schematic view of a conductor bar 2 designed as a Roebel bar with a transposition of 360° in the active part 3 and 60° transposition in the end parts 4 according to a transposition scheme of 60°/360°/60° according to an example of the invention. Included are circles with plus and minus signs denoting the magnetic field compensation in the different areas of the conductor bar 2 which compensation is achieved by the transpositions.

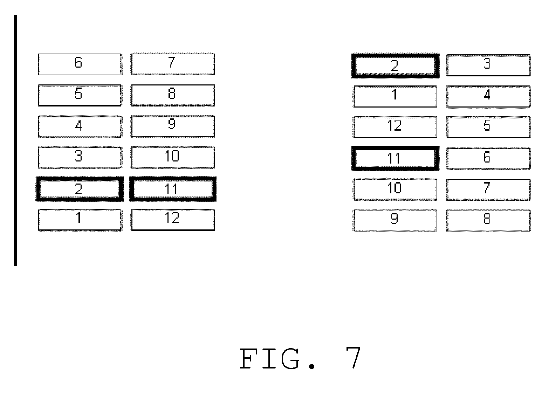

Fig. 7 shows two schematic side views of the arrangements of strands 6 in two adjacent stacks 10, 11 of strands 6 and the change of the position of two marked strands 6 from the beginning of the first end part 4 to the end of the second end part 4 according to the transposition schemes of Fig. 6. The marked strands 6 are numbered with number two and number eleven similar to the stacks 10, 11 according to Fig. 3. As can be seen in Figs. 6 and 7 the strand 6 with the number two is positioned firstly in the second position number two from the bottom of the first stack 10. At the right side of Fig. 7 it can be seen that the strand 6 with the number two has changed the position to the second position from above in the first stack 10 from the left end to the right end of the conductor bar 2. The course of the strand 6 with the number two can be traced in Fig. 6 and 7 by the corresponding line in bolt. The strand 6 with the number two changes the stack two times along the conductor bar 2. Similarly, a strand 6 with the number eleven is emphasized, starting from the second position from the bottom of the second stack 11 and ending at the second position from the bottom of the first stack 10. As visible in Figs. 6 and 7 the strand 6 with the number eleven changes the stacks 10, 11 three times, whereby each turnaround of the bolt line characterizes one change of stack 10, 11.

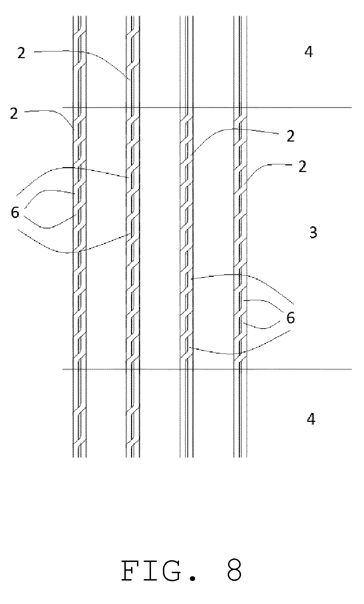

Fig. 8 shows for illustration reasons in a different view four different transposition schemes, based on a bar consisting of twelve strands. Therefore, one transposition turns the bar by an angle of 30° in Fig. 8. The view shows the strands 6 from above with two stacks 10, 11 of strands 6 transposed, like a top view from Fig. 3. Fig. 8 shows four stacks 10, 11 with two different transposition schemes in the active part 3 and two different transposition schemes in the end part 4. Thus, four examples are illustrated, each with two stacks 10, 11. The pair at the left has a transposition of the active part 3 in the middle of 360°, on the left twelve transpositions, and of 330° on the right, eleven transpositions, as well as transpositions in the end parts 4 of 60° at the top and the bottom. The pair at the right has transpositions of the strands 6 in the active part 3 in the middle of 360°, on the left twelve transpositions, and of 330° on the right, eleven transpositions, and no transpositions in the end parts 4.

Another aspect of the disclosed invention is that the invention facilitates the Roebelisation of short end parts 4, also called end windings. This is in particular useful in the technical field of stator bars and rotor bars of hydro generator constructions.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents.

### REFERENCE NUMBERS

- 2: conductor bar
- 3: active part
- 4: end part
- 6: strand
- 10: first stack
- 11: second stack

## Claims

1. Conductor bar (2) for a stator or a rotor of an electric machine comprising a multitude of mutually electrically insulated transposed strands (6), **characterized in that** the strands (6) in an active part (3) of the conductor bar (2) are transposed between 330° and 390° and **in that** the strands (6) in an end part (4) of the conductor bar (2) are transposed between 30° and 60°.

2. Conductor bar (2) according to claim 1, **characterized in that** the transposition in the active part (3) of the conductor bar (2) is in the range of 360° and 390°.

3. Conductor bar (2) according to claim 2, **characterized in that** the transposition in the active part (3) of the conductor bar (2) is a complete transposition of 360°.

4. Conductor bar (2) according to claim 1, **characterized in** an incomplete transposition in the active part (3) of the conductor bar (2).

5. Conductor bar (2) according to claim 4, **characterized in that** the incomplete transposition in the active part (3) of the conductor bar (2) is in the range of 330° and 360°.

6. Conductor bar (2) according to claim 4, **characterized in that** the incomplete transposition in the active part (3) of the conductor bar (2) is in the range of 345° to 350°.

7. Use of a conductor bar (2) according to claim 1 as a stator bar in a stator or a rotor bar in a rotor of an electric machine.
